# EUROPEAN PATENT APPLICATION

(11) **EP 4 557 331 A1**
(43) Date of publication of application: **21.05.2025**
(21) Application number: 24198376.6
(22) Date of filing: 04.09.2024
(51) Int. Cl.: H01G 4/012, H01G 4/232, H01G 4/30, H01G 4/005, H01G 4/008, H01G 4/12

(54) **MULTILAYER ELECTRONIC COMPONENT**

(30) Priority: 20.11.2023 KR 20230160216
(71) Applicant: Samsung Electro-Mechanics Co., Ltd., Gyeonggi-do (KR)
(72) Inventor: Son, Min Jae, Suwon-si, Gyeonggi-do (KR); Park, Jae Sung, Suwon-si, Gyeonggi-do (KR)
(74) Representative: Grünecker Patent- und Rechtsanwälte PartG mbB

(57) **Abstract**

A multilayer electronic component includes a first internal electrode layer, a second internal electrode layer, and two or more third internal electrode layers including a third internal electrode spaced apart from first and second external electrodes, disposed between the first internal electrode layer having a first internal electrode and a first dummy electrode and the second internal electrode layer having a second internal electrode and a second dummy electrode.

## Description

### CROSS-REFERENCE TO RELATED APPLICATION(S)

The present application claims the benefit of priority to Korean Patent Application No. 10-2023-0160216 filed on November 20, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor, a multilayer electronic component, is a chip-shaped condenser mounted on the printed circuit boards of various electronic products such as display devices, liquid crystal displays (LCDs), plasma display panels (PDPs) and the like, for example, as well as computers, smartphones, mobile phones, and the like, to serve to charge and discharge electricity therein and therefrom.

Multilayer ceramic capacitors having advantages, such as a small size, high capacitance, ease of mounting, or the like, may be used as components in various electronic devices, and as various electronic devices, such as computers and mobile devices become smaller and have higher output, there has been growing demand for miniaturization and high capacitance for multilayer ceramic capacitors.

To improve withstand voltage characteristics of multilayer ceramic capacitors, a structure of dividing voltage using floating electrodes has been developed. However, in the related art floating electrode structure, an overlap area is reduced due to a longitudinal gap between floating electrodes, resulting in a significant decrease in capacitance.

### SUMMARY

An aspect of the present disclosure is to provide a highly reliable multilayer electronic component.

Another aspect of the present disclosure is to provide a multilayer electronic component having improved capacitance per unit volume.

Another aspect of the present disclosure is to provide a multilayer electronic component having improved withstand voltage characteristics.

Another aspect of the present disclosure is to provide a layered electronic component having a structure allowing for efficient production.

However, the purpose of the present disclosure is not limited to the above-described contents, and may be more easily understood in the process of describing specific exemplary embodiments of the present disclosure.

According to an aspect of the present disclosure, a multilayer electronic component includes: a body including a first internal electrode layer including a first dielectric layer and a first internal electrode and a first dummy electrode disposed to be spaced apart from each other on the first dielectric layer, a second internal electrode layer including a second dielectric layer and a second internal electrode and a second dummy electrode disposed to be spaced apart from each other on the second dielectric layer, and at least one third internal electrode layer including a third dielectric layer and a third internal electrode disposed on the third dielectric layer, the body including first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode disposed on the third surface and connected to the first internal electrode and the second dummy electrode; and a second external electrode disposed on the fourth surface and connected to the second internal electrode and the first dummy electrode, in which the third internal electrode is disposed to be spaced apart from the third and fourth surfaces, the first internal electrode layer and the second internal electrode layer are alternately arranged in the first direction, and the at least one third internal electrode layer includes two or more third internal electrode layers that are disposed between the first internal electrode layer and the second internal electrode layer.

According to another aspect of the present disclosure, a multilayer electronic component includes: a body including a first internal electrode layer including a first dielectric layer and a first internal electrode and a first dummy electrode disposed to be spaced apart from each other on the first dielectric layer, a second internal electrode layer including a second dielectric layer and a second internal electrode and a second dummy electrode disposed to be spaced apart from each other on the second dielectric layer, and at least one third internal electrode layer including a third dielectric layer and a third internal electrode disposed on the third dielectric layer, the body including first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode disposed on the third surface and connected to the first internal electrode and the second dummy electrode; and a second external electrode disposed on the fourth surface and connected to the second internal electrode and the first dummy electrode, in which the third internal electrode is disposed to be spaced apart from the third and fourth surfaces, the first internal electrode layer and the second internal electrode layer are alternately arranged in the first direction, and when sizes of the first internal electrode, the first dummy electrode, and the third internal electrode in the second direction are Li1, Ld1, and Li3, respectively, Li3 is substantially equal to Li1+Ld1.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an exemplary embodiment in the present disclosure;
FIG. 2 is a schematical cross-sectional view taken along line I-I' of FIG. 1;
FIG. 3 is a schematical cross-sectional view taken along line II-II' of FIG. 1;
FIG. 4 illustrates a plan view of a first internal electrode layer, a second internal electrode layer, and a third internal electrode layer;
FIG. 5 illustrates a first sheet for manufacturing a multilayer electronic component according to an exemplary embodiment in the present disclosure;
FIG. 6 is a diagram illustrating a stacking method of a multilayer electronic component according to an exemplary embodiment in the present disclosure;
FIG. 7 illustrates cross-sections of the related art multilayer electronic component having a floating electrode structure in first and second directions;
FIG. 8 is a diagram illustrating a capacitance formation region of a multilayer electronic component according to an exemplary embodiment in the present disclosure; and
FIG. 9 is a diagram illustrating a capacitance formation region of the related art multilayer electronic component having a floating electrode structure.

### DETAILED DESCRIPTION

Hereinafter, exemplary embodiments of the present inventive concept will be described in detail with reference to the accompanying drawings. The inventive concept may, however, be exemplified in many different forms and should not be construed as being limited to the specific exemplary embodiments set forth herein. Rather, these exemplary embodiments are provided so that this disclosure will be thorough and complete, and will fully convey the scope of the inventive concept to those skilled in the art. In the drawings, the shapes and dimensions of elements may be exaggerated for clarity, and the same reference numerals will be used throughout to designate the same or like elements.

To clarify the present disclosure, portions irrespective of description are omitted and like numbers refer to like elements throughout the specification, and in the drawings, the thickness of layers, films, panels, regions, etc., are exaggerated for clarity. Also, in the drawings, like reference numerals refer to like elements although they are illustrated in different drawings. Throughout the specification, unless explicitly described to the contrary, the word "comprise" and variations, such as "comprises" or "comprising," will be understood to imply the inclusion of stated elements but not the exclusion of any other elements.

In the drawing, a first direction may be defined as a stacking direction or thickness T direction, a second direction may be defined as a length L direction, and a third direction may be defined as a width W direction.

### Multilayer electronic components

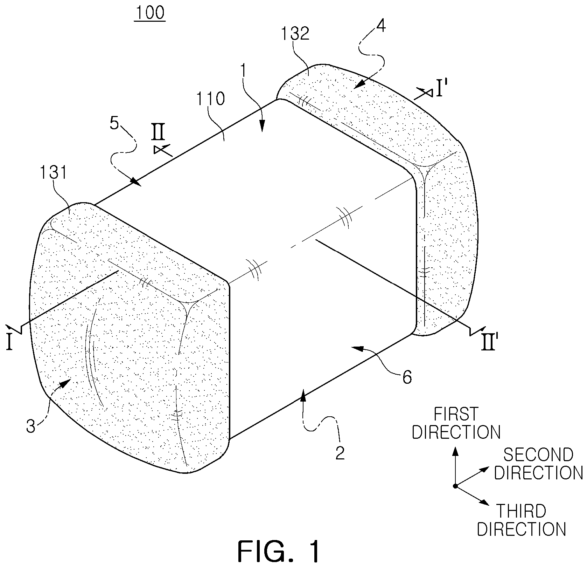

FIG. 1 is a perspective view schematically illustrating a multilayer electronic component according to an exemplary embodiment in the present disclosure.

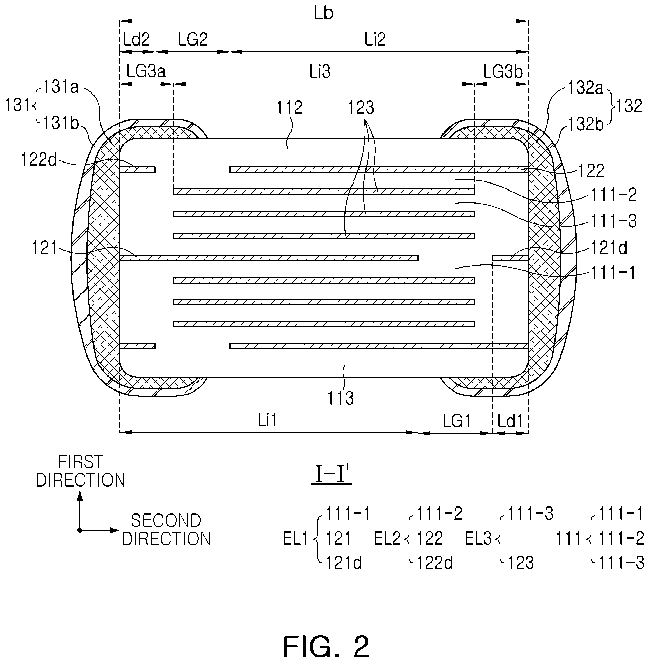

FIG. 2 is a schematical cross-sectional view taken along line I-I' of FIG. 1.

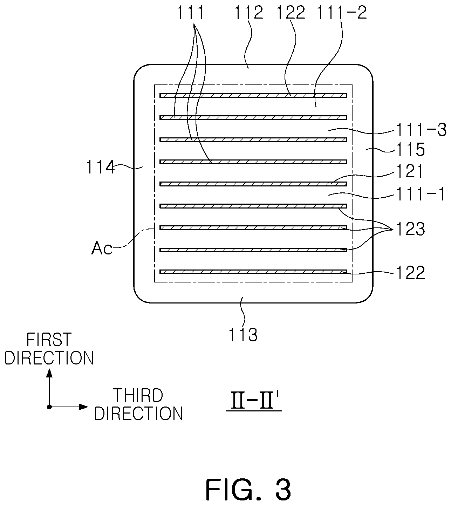

FIG. 3 is a schematical cross-sectional view taken along line II-II' of FIG. 1.

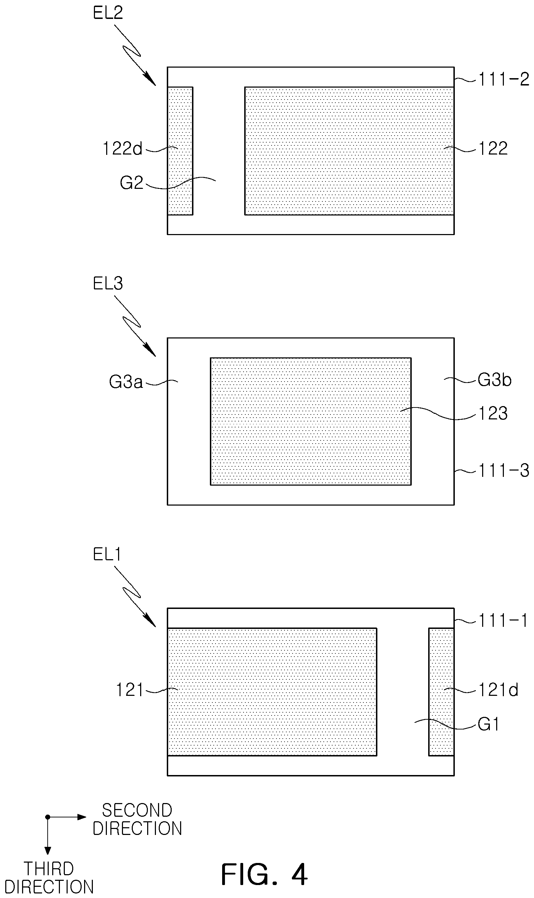

FIG. 4 illustrates a plan view of a first internal electrode layer, a second internal electrode layer, and a third internal electrode layer.

Hereinafter, a multilayer electronic component 100 according to an exemplary embodiment in the present disclosure is described in detail with reference to FIGS. 1 to 4. In addition, a multilayer ceramic capacitor (MLCC) is described as an example of a multilayer electronic component, but the present disclosure is not limited thereto.

The multilayer electronic component 100 according to an exemplary embodiment in the present disclosure includes a body 110 including a first internal electrode layer EL1 including a first dielectric layer 111-1 and a first internal electrode 121 and a first dummy electrode 121d disposed to be spaced apart from each other on the first dielectric layer 111-1, a second internal electrode layer EL2 including a second dielectric layer 111-2 and a second internal electrode 122 and a second dummy electrode 122d disposed to be spaced apart from each other on the second dielectric layer 111-2, and a third internal electrode layer EL3 including a third dielectric layer 111-3 and a third internal electrode 123 disposed on the third dielectric layer 111-3. The body 110 may include first and second surfaces 1 and 2 opposing each other in the first direction, third and fourth surfaces 3 and 4 connected to the first and second surfaces and opposing each other in the second direction, and fifth and sixth surfaces 5 and 6 connected to the first to fourth surfaces and opposing each other in the third direction; a first external electrode 131 disposed on the third surface 3 and connected to the first internal electrode 121 and the second dummy electrode 122d; and a second external electrode 132 disposed on the fourth surface 4 and connected to the second internal electrode 122 and the first dummy electrode 121d. The third internal electrode 123 may be disposed to be spaced apart from the third and fourth surfaces 3 and 4, the first internal electrode layer EL1 and the second internal electrode layer EL2 are alternately arranged in the first direction, and two or more third internal electrode layers EL3 may be disposed between the first internal electrode layer EL1 and the second internal electrode layer EL2.

To improve withstand voltage characteristics, a structure of dividing voltage using a floating electrode has been developed. However, in the related art floating electrode structure, the overlap area is reduced due to a longitudinal gap between floating electrodes, resulting in a significant decrease in capacitance.

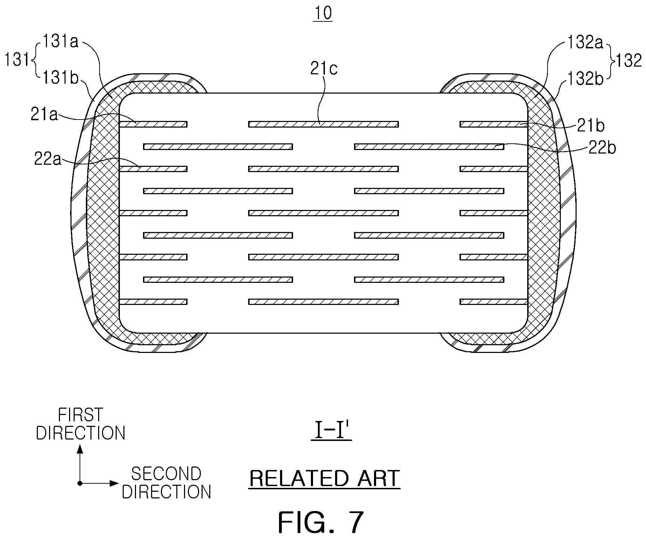

Referring to FIG. 7 illustrating a cross-section in the first and second directions of the related art multilayer electronic component 10 having a floating electrode structure, the related art multilayer electronic component 10 has a structure in which a first electrode portion in which a first internal electrode 21a connected to the first external electrode 131, a second internal electrode 21b connected to the second external electrode 132, and a first floating electrode 21c disposed between the first internal electrode and the second internal electrode are disposed on the same plane and a second electrode portion in which a second floating electrode 22a and a third floating electrode 22b are disposed on the same plane are alternately disposed in the stacking direction.

The floating electrode structure of the related art was intended to improve withstand voltage characteristics by lowering voltage applied to the ends of the electrodes 21a, 21b, 21c, 22a, and 22b. However, due to the gap between the electrodes 21a, 21b, 21c, 22a, and 22b, a capacitance formation region was reduced and the capacitance per unit volume was lowered. In order to supplement this, if the stacking number increases, the number of the ends of the electrodes may excessively increase to rather deteriorate the withstand voltage characteristics.

In contrast, in the present disclosure, two or more third internal electrodes EL3 including the third internal electrode 123 spaced apart from the first and second external electrodes are disposed between the first internal electrode layer EL1 including the first internal electrode 121 and the second internal electrode layer EL2 including the second internal electrode 122, thereby improving the capacitance per unit volume, while improving the withstand voltage characteristics of the multilayer electronic component 100.

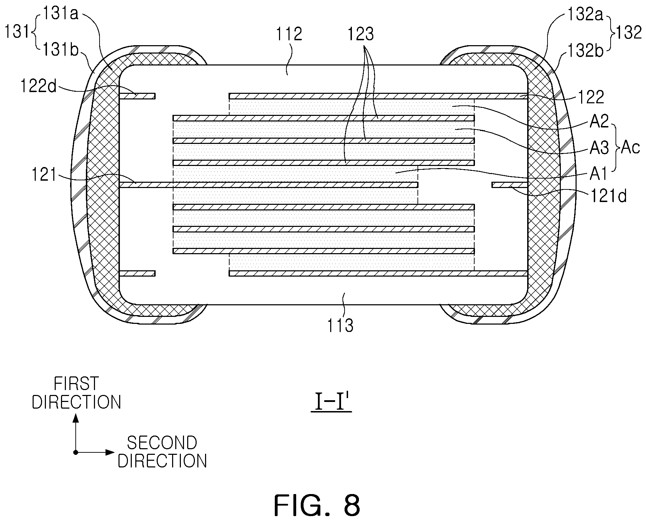

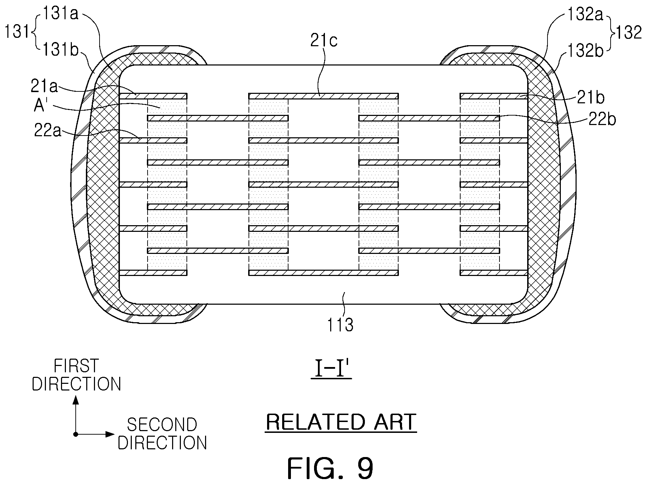

FIG. 8 is a diagram illustrating a capacitance formation region of a multilayer electronic component according to an exemplary embodiment in the present disclosure. FIG. 9 is a diagram illustrating a capacitance formation region of the related art multilayer electronic component having a floating electrode structure. Referring to FIGS. 8 and 9, it can be seen that the capacitance formation regions A1, A2, and A3 indicated by shading of the multilayer electronic component 100 according to an exemplary embodiment in the present disclosure are much larger than a capacitance formation region A' of the related art multilayer electronic component 10. Therefore, the multilayer electronic component 100 according to an exemplary embodiment in the present disclosure has improved capacitance per unit volume compared to the related art multilayer electronic component 10, and when designed to have the same capacitance as the related art multilayer electronic component 10, the multilayer electronic component 100 according to an exemplary embodiment in the present disclosure may be manufactured to be smaller than the related art multilayer electronic component 100.

In addition, the greatest electrostrictive stress generally occurs at the end of the electrode, and deterioration of withstand voltage characteristics also occurs first at the end of the electrode. According to an exemplary embodiment in the present disclosure, the number of electrode ends is reduced by about 25% compared to the related art multilayer electronic component 10, so not only are the vulnerable portions in which withstand voltage characteristic deterioration occurs reduced, but also a distance over which cracks generated at the electrode ends propagate to lead to a leakage current path increases, thereby delaying the breakdown of withstand voltage.

Hereinafter, each component included in the multilayer electronic component 100 according to an exemplary embodiment in the present disclosure is described.

Although there is no particular limitation on the specific shape of the body 110, the body 110 may have a hexahedral shape or a similar shape as illustrated. Due to shrinkage of ceramic powder particles included in the body 110 during a sintering process, the body 110 may not have a hexahedral shape with entirely straight lines, but may have a substantially hexahedral shape.

The body 110 may have the first and second surfaces 1 and 2 opposing each other in a first direction, the third and fourth surfaces 3 and 4 connected to the first and second surfaces 1 and 2 and opposing each other in the second direction, and the fifth and sixth surface 5 and 6 connected to the first and second surfaces 1 and 2 and connected to the third and fourth surfaces 3 and 4 and opposing each other in the third direction.

As margin regions in which the internal electrodes 121, 122, and 123 are not disposed overlap on the dielectric layer 111, a step due to the thickness of the internal electrodes 121, 122, and 123 occurs, and thus, the corner connecting the first surface 1 to the third to fifth surfaces 3, 4, and 5 and/or the corner connecting the second surface 2 to the third to fifth surfaces 3, 4, and 5 may be contracted toward the center of the body 110 in the first direction when viewed from the first surface 1 or the second surface 2. Alternatively, due to shrinkage behavior occurring during the sintering process of the body, the corner connecting the first surface 1 to the third to sixth surfaces 3, 4, 5, and 6 and/or the corner connecting the second surface 2 to the third to sixth surfaces 3, 4, 5, and 6 may be contracted toward the center of the body 110 in the first direction when viewed from the first or second surface 1 or 2. Alternatively, in order to prevent chipping defects, the corners connecting each surface of the body 110 may be rounded by performing a separate process, so that the corners connecting the first surface 1 to the third to sixth surfaces 3, 4, 5, and 6 and/or the corner connecting the second surface 2 to the third to sixth surfaces 3, 4, 5, and 6 may have a round shape.

The plurality of dielectric layers 111 constituting the body 110 are in a sintered state, and adjacent dielectric layers 111 may be integrated such that boundaries therebetween may not be readily apparent without using a scanning electron microscope (SEM). The number of stacked dielectric layers are not particularly limited and may be determined considering the size of the multilayer electronic component. For example, the body may be formed by stacking 400 or more dielectric layers.

The dielectric layer 111 may be formed by preparing a ceramic slurry including ceramic powder, an organic solvent, and a binder, applying the slurry on a carrier film and drying the same to prepare a ceramic green sheet, and then sintering the ceramic green sheet. The ceramic powder is not particularly limited as long as sufficient electrostatic capacitance may be obtained therewith, but for example, barium titanate (BaTiO₃)-based powder may be used as the ceramic powder. For a more specific example, the ceramic powder may be barium titanate (BaTiO₃)-based powder, CaZrO₃-based paraelectric powder, etc. For a more specific example, barium titanate (BaTiO3)-based powder may be one of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), and Ba(Ti_{1-y}Zr_{y})O₃ (0<y<1), and CaZrO₃-based paraelectric powder may be (Ca₁₋ₓSrₓ)(Zr_{1-y}Ti_{y})O₃ (0<x<1, 0<y<1).

Therefore, the dielectric layer 111 may include one or more of BaTiO₃, (Ba₁₋ₓCaₓ)TiO₃ (0<x<1), Ba(Ti_{1-y}Ca_{y})O3 (0<y<1), (Ba₁₋ₓCaₓ)(Ti_{1-y}Zr_{y})O₃ (0<x<1, 0<y<1), Ba(Ti_{1-y}Zr_{y})O₃ (0<y<1), and (Ca₁₋ₓSrₓ)(Zr_{1-y}Ti_{y})O₃ (0<x<1, 0<y<1). In an exemplary embodiment, the dielectric layer 111 may include (Ca₁₋ₓSrₓ)(Zr_{1-y}Ti_{y})O₃ (0<x<1, 0<y<1) as a main component.

The dielectric layer 111 may include a first dielectric layer 111-1, a second dielectric layer 111-2, and a third dielectric layer 111-3. Here, the first dielectric layer 111-1, the second dielectric layer 111-2, and the third dielectric layer 111-3 may be formed of the same material.

The body 110 may include a capacitance formation portion Ac disposed inside the body 110 and including the first to third internal electrode layers EL1, EL2, and EL3 to form capacitance and cover portions 112 and 113 formed on upper and lower surfaces of the capacitance formation portion Ac

The cover portions 112 and 113 may include an upper cover portion 112 disposed above the capacitance formation portion Ac in the first direction and a lower cover portion 113 disposed below the capacitance formation portion Ac in the first direction.

The upper cover portion 112 and the lower cover portion 113 may be formed by stacking a single dielectric layer or two or more dielectric layers on the upper and lower surfaces of the capacitance forming portion Ac in the thickness direction, respectively, and may basically serve to prevent damage to the internal electrodes due to physical or chemical stress.

The upper cover portion 112 and the lower cover portion 113 may not include internal electrodes and may include the same material as that of the dielectric layer 111.

That is, the upper cover portion 112 and the lower cover portion 113 may include a ceramic material, for example, a barium titanate (BaTiO₃)-based ceramic material.

In addition, margin portions 114 and 115 may be disposed on side surfaces of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the body 110 in the width direction.

As shown in FIG. 3, the margin portions 114 and 115 may refer to a region between both ends of the internal electrodes 121, 122, and 123 and a boundary surface of the body 110 in a cross-section of the body 110 taken in a width-thickness (W-T) direction.

formed at both ends of the internal electrodes 121, 122, and 123 in a cross-section of the body 110 in the width-thickness (W-T) direction. It may refer to the region between the boundary surface of the body 110 and the body 110.

The margin portions 114 and 115 may basically serve to prevent damage to the internal electrodes due to physical or chemical stress.

The margin portions 114 and 115 may be formed by forming internal electrodes by applying conductive paste on a ceramic green sheet except for regions in which the margin portions are to be formed.

The first internal electrode layer EL1 may include the first dielectric layer 111-1 and the first internal electrode 121 and a first dummy electrode 121d disposed to be spaced apart from each other on the first dielectric layer. The second internal electrode layer EL2 may include the second dielectric layer 111-2 and the second internal electrode 122 and a second dummy electrode 122d disposed to be spaced apart from each other on the second dielectric layer. The third internal electrode layer EL3 may include the third dielectric layer 111-3 and the third internal electrode 123 disposed on the third dielectric layer.

The first internal electrode layer EL1 and the second internal electrode layer EL2 may be alternately arranged in the first direction, and two or more third internal electrode layers EL3 may be disposed between the first internal electrode layer EL1 and the second internal electrode layer EL2. As two or more third internal electrode layers EL3 are disposed, withstand voltage characteristics may be improved, and even if a crack occurs at the end of the electrode, it may be delayed from leading to a leakage current path.

The first internal electrode 121 may be spaced apart from the fourth surface 4 and exposed through the third surface 3, the second internal electrode 122 may be spaced apart from the third surface 3 and exposed through the fourth surface 4, and the third internal electrode 123 may be disposed to be spaced apart from the third and fourth surfaces 3 and 4.

The first external electrode 131 may be disposed on the third surface 3 of the body 110 and connected to the first internal electrode 121, and the second external electrode 132 may be disposed on the fourth surface 4 of the body 110 and connected to the second internal electrode 122.

That is, the first internal electrode 121 is not connected to the second external electrode 132 but is connected to the first external electrode 131, and the second internal electrode 122 is not connected to the first external electrode 131 but is connected to the second external electrode 132. Accordingly, the first internal electrode 121 may be formed at a certain distance apart from the fourth surface 4, and the second internal electrode 122 may be formed at a certain distance apart from the third surface 3. In addition, the first and second internal electrodes 121 and 122 may be arranged to be spaced apart from the fifth and sixth surfaces 5 and 6 of the body 110.

The first dummy electrode 121d may be connected to the second external electrode 132, and the second dummy electrode 122d may be connected to the first external electrode 131. The first and second dummy electrodes 121d and 122d may not contribute to forming capacitance but may serve to compensate for the step due to the internal electrodes.

Conductive metal included in the internal electrodes 121, 122, and 123 and the dummy electrodes 121d and 122d may be one or more of Ni, Cu, Pd, Ag, Au, Pt, In, Sn, Al, Ti, and alloys thereof, but the present disclosure is not limited thereto.

In an exemplary embodiment, the first to third internal electrodes 121, 122, and 123 overlap in the first direction in at least a partial region, and the first and second dummy electrodes 121d and 122d are the third internal electrode (125) and may not overlap in the first direction. Accordingly, the first to third internal electrodes 121, 122, and 123 may contribute to capacitance formation, and the first and second dummy electrodes 121d and 122d may not contribute to capacitance formation.

In an exemplary embodiment, three or more third internal electrode layers EL3 may be disposed between the first internal electrode layer EL1 and the second internal electrode layer EL2. Accordingly, the withstand voltage characteristics may be further improved, and even if a crack occurs at the end of the electrode, it may be further delayed from leading to a leakage current path.

In an exemplary embodiment, when the sizes of the first, second, and third internal electrodes in the second direction are Li1, Li2, and Li3, respectively, Li3>Li2 and Li3>Li2 may be satisfied. Accordingly, it is possible to have a structure enabling efficient production, and even when there are two or more third internal electrode layers EL3 disposed between the first internal electrode layer EL1 and the second internal electrode layer EL2, the multilayer electronic component 100 may be manufactured using only a printed sheet GS1 on which one type of printed pattern is printed.

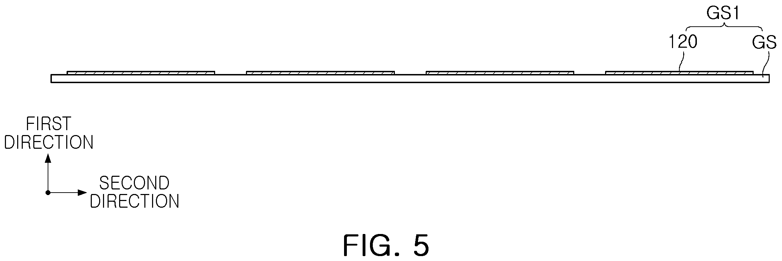

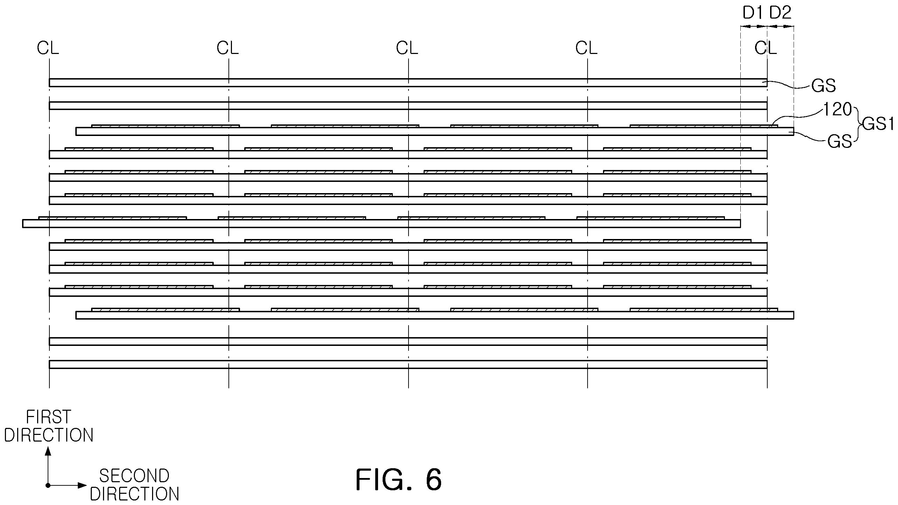

Specifically, referring to FIGS. 5 and 6 illustrating a method of manufacturing a multilayer electronic component according to an exemplary embodiment in the present disclosure, the multilayer electronic component 100 according to an exemplary embodiment in the present disclosure may be manufactured using only the printed sheet GS1 on which one type of pattern 120 is printed. Since the cover portions 112 and 113 are formed by stacking ceramic green sheets GS on which no printed pattern is printed, the multilayer electronic component 100 may be manufactured without additional sheets being wasted.

When printed pattern B for forming the third internal electrode 123 is printed apart from printed pattern A for forming the first and second internal electrodes 121 and 122 on the ceramic green sheet, printed pattern A and printed pattern B are printed repeatedly. For example, printed pattern A, printed pattern B, printed pattern A, and printed pattern B are printed sequentially, and in order to manufacture a structure in which two or more third internal electrodes 123 are stacked between the first internal electrode 121 and the second internal electrode 122, the printed pattern A printed between the printed patterns B cannot be used and is wasted.

Meanwhile, referring to FIG. 6, when stacking, after some of the printed sheets GS1 are stacked, the printed sheets GS1 may be stacked to be offset by certain distances D1 and D2 based on a cutting line CL, thereby implementing a structure having the first to third internal electrodes 121, 122, and 123 and the first and second dummy electrodes 121d and 122d using only the printed sheet GS1, and accordingly, Li3>Li2 and Li3 > Li2.

In an exemplary embodiment, when distances between the third internal electrode 123 and the third and fourth surfaces 3 and 5 are respectively LG3a and LG3b and the sizes of the first and second dummy electrodes 121d and 122d in the second direction are Ld1 and Ld2, respectively, LG3a>Ld2 and LG3b>Ld1 may be satisfied.

Here, Ld1 may be 85 um or more and 115 um or less, and Ld2 may be 85 um or more and 115 um or less.

In addition, LG3a may be 190 um or more and 275 um or less, and LG3b may be 190 um or more and 275 um or less.

In an exemplary embodiment, a distance between the first internal electrode 121 and the first dummy electrode 121d is LG1, a distance between the second internal electrode 122 and the second dummy electrode 122d is LG2, and distances between the third internal electrode 123 and the third and fourth surfaces 3 and 4 are LG3a and LG3b, respectively, LG1>LG3a, LG1>LG3b, LG2>LG3a, and LG2>LG3b may be satisfied.

Here, LG1 may be 380 um or more and 550 um or less, and LG2 may be 380 µm or more and 550 µm or less. In addition, LG3a may be 190 um or more and 275 um or less, and LG3b may be 190 um or more and 275 um or less.

Meanwhile, when the size of the body 110 in the second direction is Lb, LG1/Lb may be 0.12 or more and 0.18 or less, but is not limited thereto. In addition, LG2/Lb may be 0.12 or more and 0.18 or less, but is not limited thereto.

As described above, when stacking using only the printing sheet GS1 on which one type of printed pattern 120 is printed, in the case of stacking so that some of the printed sheets GS1 are offset by the certain distances D1 and D2 based on the cutting line CL after stacking, the sum (G3a + G3b) of the distances between the third internal electrode 123 and the third and fourth surfaces 3 and 4 may be substantially the same as the distance G1 between the first internal electrode 121 and the first dummy electrode 121d. However, the present disclosure is not limited thereto, and deviations may occur due to manufacturing errors, differences in shrinkage rate by location during sintering, etc.

Similarly, when the sizes of the first internal electrode 121, the first dummy electrode 121d, and the third internal electrode 123 in the second direction are Li1, Ld1, and Li3, respectively, Li3 may be substantially equal to Li1+Ld1. In addition, Li3 may be substantially equal to Li2+Ld2. However, the present disclosure is not limited thereto, and deviations may occur due to manufacturing errors, differences in shrinkage rate by location during sintering, etc.

As used herein, the expression "substantially equal" may refer to being about the same as each other between ones being compared. In one or more aspects, the terms "about," "substantially," and "approximately" may provide an industry-accepted tolerance for their corresponding terms and/or relativity between items, such as a tolerance of ± 1%, ± 5% , or ± 10% of the actual value stated, and other suitable tolerances.

In an exemplary embodiment, when a space between the first internal electrode 121 and the first dummy electrode 121d is a first space G1 and a space between the second internal electrode 122 and the second dummy electrode 122d is a second space G2, one end of the third internal electrode 123 in the second direction may be disposed to overlap the first space G1 in the first direction, and the other end of the third internal electrode 123 in the second direction may be disposed to overlap the second space G2 in the first direction.

In an exemplary embodiment, when spaces between the third internal electrode 123 and the third and fourth surfaces 3 and 4 are a 3a space G3a and a 3b space G3b, respectively, one end of the first dummy electrode 121d in the body 110 may be disposed to overlap the 3b space G3b in the first direction and one end of the second dummy electrode 122d in the body 110 may be disposed to overlap the 3a space G3a in the first direction.

In an exemplary embodiment, in the second direction, one end of the first internal electrode 121 and one end of the second internal electrode 122 each may be disposed to be closer to a center of the body 110 than both ends of the third internal electrode 123.

Meanwhile, an average thickness of the dielectric layer 111 is not particularly limited, but may be, for example, 0.1 um to 10 um. An average thickness of the internal electrodes 121, 122, and 123 is not particularly limited, but may be, for example, 0.05 um to 2.0 um. In addition, the average thickness of the dielectric layer 111 and the average thickness of the internal electrodes 121, 122, and 123 may be arbitrarily set depending on desired characteristics or purposes. For example, to achieve miniaturization and high capacitance, in the case of electronic components for high-voltage electric devices, the average thickness of the dielectric layer 111 may be less than 2.8 um and the average thickness of the internal electrodes 121, 122, and 123 may be less than 1 µm. In addition, to achieve miniaturization and high capacitance, in the case of electronic components for small IT devices, the average thickness of the dielectric layer 111 may be 0.4 µm or less and the average thickness of the internal electrodes 121, 122, and 123 may be 0.4 µm or less.

The average thickness of the dielectric layer 111 and the average thickness of the internal electrodes 121, 122, and 123 may refer to the sizes of the dielectric layer 111 and the internal electrodes 121, 122, and 123 in the first direction, respectively. The average thickness of the dielectric layer 111 and the average thickness of the internal electrodes 121 and 122 may be measured by scanning cross-sections of the body 110 in the first and second directions with a scanning electron microscope (SEM) at 10,000 magnification. More specifically, as for the average thickness of the dielectric layer 111, the thicknesses at multiple points of one dielectric layer 111, for example, 30 points at equal intervals in the second direction, may be measured and an average value thereof may be calculated. In addition, as for the average thickness of the internal electrodes 121 and 122, the thicknesses at multiple points of one internal electrode 121 or 122, for example, 30 points at equal intervals in the second direction, may be measured and an average value thereof may be calculated. The 30 equally spaced points may be designated in the capacitance formation portion Ac. Meanwhile, the average values may be measured for ten dielectric layers 111 and ten internal electrodes 121 and 122, respectively, and then averaged to further generalize the average thickness of the dielectric layer 111 and the average thickness of the internal electrodes 121 and 122.

The first external electrode 131 may be disposed on the third surface 3 of the body 110 and may be connected to the first internal electrode 121 and the second dummy electrode 122d, and the second external electrode 132 may be disposed on the fourth surface 4 of the body 110 and may be connected to the second internal electrode 122 and the first dummy electrode 121d.

Meanwhile, the external electrodes 131 and 132 may be formed using any material having electrical conductivity, such as metal, and a specific material may be determined considering electrical characteristics, structural stability, etc., and the external electrodes 131 and 132 may further have a multi-layer structure.

For example, the external electrodes 131 and 132 may include electrode layers 131a and 132a disposed on the body 110 and plating layers 131b and 132b formed on the electrode layers 131a and 132a.

For more specific examples of the electrode layers 131a and 132a, the electrode layers 131a and 132a may be fired electrodes including conductive metal and glass or may be resin-based electrodes including conductive metal and resin.

In addition, the electrode layers 131a and 132a may be formed by sequentially forming a fired electrode and a resin-based electrode on a body. In addition, the electrode layers 131a and 132a may be formed by transferring a sheet including a conductive metal onto a body or by transferring a sheet including a conductive metal onto a fired electrode.

As the conductive metal included in the electrode layers 131a and 132a, a material having excellent electrical conductivity may be used and is not particularly limited. For example, the conductive metal may be one or more of nickel (Ni), copper (Cu), and alloys thereof.

The plating layers 131b and 132b serve to improve mounting characteristics. The plating layers 131b and 132b is not particularly limited in type, may be plating layers including one or more of Ni, Sn, Pd, and alloys thereof, and may be formed of a plurality of layers.

For a more specific example of the plating layers 131b and 132b, the plating layers 131b and 132b may include a Ni plating layer or a Sn plating layer, may include the Ni plating layer and Sn plating layer formed sequentially on the electrode layers 131a and 132a, and may include a Sn plating layer, a Ni plating layer, and a Sn plating layer being formed sequentially. In addition, the plating layers 131b and 132b may include a plurality of Ni plating layers and/or a plurality of Sn plating layers.

The size of the multilayer electronic component 100 is not particularly limited. For example, a length L of the multilayer electronic component 100 may be 2900 to 3100 mm, a thickness T of the multilayer electronic component 100 may be 1500 to 1700 mm, and a width of the multilayer electronic component 100 may be 1450 to 1550 mm.

Here, the length L of the multilayer electronic component 100 may refer to the maximum size of the multilayer electronic component 100 in the second direction, the thickness T of the multilayer electronic component 100 may refer to the maximum size of the multilayer electronic component 100 in the first direction, and the width W of the multilayer electronic component 100 may refer to the maximum size of the multilayer electronic component 100 in the third direction.

As one of various effects of the present disclosure, the capacitance per unit volume of the multilayer electronic component may be improved, while the withstand voltage characteristics are improved.

As one of various effects of the present disclosure, it is possible to provide the multilayer electronic component having a structure enabling efficient production.

While example exemplary embodiments have been shown and described above, it will be apparent to those skilled in the art that modifications and variations could be made without departing from the scope of the present disclosure as defined by the appended claims.

## Claims

1. A multilayer electronic component comprising:
a body including a first internal electrode layer including a first dielectric layer and a first internal electrode and a first dummy electrode disposed to be spaced apart from each other on the first dielectric layer, a second internal electrode layer including a second dielectric layer and a second internal electrode and a second dummy electrode disposed to be spaced apart from each other on the second dielectric layer, and at least one third internal electrode layer each including a third dielectric layer and a third internal electrode disposed on the third dielectric layer, the body including first and second surfaces opposing each other in a first direction, third and fourth surfaces connected to the first and second surfaces and opposing each other in a second direction, and fifth and sixth surfaces connected to the first to fourth surfaces and opposing each other in a third direction;
a first external electrode disposed on the third surface and connected to the first internal electrode and the second dummy electrode; and
a second external electrode disposed on the fourth surface and connected to the second internal electrode and the first dummy electrode,
wherein the third internal electrode is disposed to be spaced apart from the third and fourth surfaces,
the first internal electrode layer and the second internal electrode layer are alternately arranged in the first direction, and
the at least one third internal electrode layer includes two or more third internal electrode layers that are disposed between the first internal electrode layer and the second internal electrode layer.

2. The multilayer electronic component of claim 1, wherein the first to third internal electrodes overlap in the first direction in at least a partial region, and the first and second dummy electrodes do not overlap the third internal electrode in the first direction.

3. The multilayer electronic component of claim 1, wherein the at least one third internal electrode layer includes three or more third internal electrode layers that are disposed between the first internal electrode layer and the second internal electrode layer.

4. The multilayer electronic component of claim 1, wherein Li3>Li1 and Li3>Li2, wherein Li1, Li2, and Li3 are sizes of the first, second, and third internal electrodes in the second direction, respectively.

5. The multilayer electronic component of claim 1, wherein LG3a>Ld2 and LG3b>Ld1, wherein LG3a and LG3b are distances between the third internal electrode and the third and fourth surfaces, respectively, and Ld1 and Ld2 are sizes of the first and second dummy electrodes in the second direction, respectively.

6. The multilayer electronic component of claim 5, wherein Ld1 is 85 um or more and 115 um or less, and Ld2 is 85 µm or more and 115 um or less.

7. The multilayer electronic component of claim 5, wherein LG3a is 190 um or more and 275 um or less, and LG3b is 190 µm or more and 275 um or less.

8. The multilayer electronic component of claim 1, wherein LG1>LG3a, LG1>LG3b, LG2>LG3a, and LG2>LG3b, wherein LG1 is a distance between the first internal electrode and the first dummy electrode, LG2 is a distance between the second internal electrode and the second dummy electrode, and LG3a and LG3b are distances between the third internal electrode and the third and fourth surfaces, respectively.

9. The multilayer electronic component of claim 8, wherein LG1 is 380 um or more and 550 um or less, and LG2 is 380 µm or more and 550 um or less.

10. The multilayer electronic component of claim 9, wherein LG3a is 190 um or more and 275 um or less, and LG3b is 190 µm or more and 275 um or less.

11. The multilayer electronic component of claim 1, wherein,
when a space between the first internal electrode and the first dummy electrode is a first space and a space between the second internal electrode and the second dummy electrode is a second space,
one end of the third internal electrode in the second direction is disposed to overlap the first space in the first direction, and the other end of the third internal electrode in the second direction is disposed to overlap the second space in the first direction.

12. The multilayer electronic component of claim 1, wherein,
when spaces between the third internal electrode and the third and fourth surfaces are a 3a space and a 3b space, respectively,
one end of the first dummy electrode in the body is disposed to overlap the 3b space in the first direction and one end of the second dummy electrode in the body is disposed to overlap the 3a space in the first direction.

13. The multilayer electronic component of claim 1, wherein a sum of distances between the third internal electrode and the third and fourth surfaces is substantially equal to a distance between the first internal electrode and the first dummy electrode.

14. The multilayer electronic component of claim 1, wherein, when sizes of the first internal electrode, the first dummy electrode, and the third internal electrode in the second direction are Li1, Ld1, and Li3, respectively, Li3 is substantially equal to Li1+Ld1.

15. The multilayer electronic component of claim 1, wherein, in the second direction, one end of the first internal electrode and one end of the second internal electrode each are disposed to be closer to a center of the body than both ends of the third internal electrode.
